(19) **Europäisches Patentamt / European Patent Office / Office européen des brevets**

(11) **EP 1 860 895 A1**

(12) **EUROPÄISCHE PATENTANMELDUNG**

(43) Veröffentlichungstag:
   **28.11.2007 Patentblatt 2007/48**

(51) Int Cl.:
   *H04Q 7/30* *(2006.01)*

(21) Anmeldenummer: **06010766.1**

(22) Anmeldetag: **24.05.2006**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(71) Anmelder: **NOKIA SIEMENS NETWORKS GMBH & CO. KG**
   **81541 München (DE)**

(72) Erfinder:
   • **Hassler, Bernd, Dr.**
     **89171 Illerkirchberg (DE)**
   • **Höck, Georg, Dr.**
     **89081 Ulm (DE)**
   • **Splett, Armin, Dr.**
     **89081 Ulm (DE)**

(54) **Verfahren und Anordnung zur Übertragung von Datensignalen**

(57) Die Erfindung betrifft ein Verfahren und eine Anordnung zur Übertragung von Datensignalen zwischen räumlich getrennt angeordneten Basisstationseinheiten (BE1, BE2). Datensignale (SIG1) einer ersten Basisstationseinheit (BE1) werden über eine CPRI-Schnittstelle (CPRI) als CPRI-Datensignale übertragen. Die CPRI-Datensignale (SIG1) werden für eine Übertragung über eine GMII-Schnittstelle (GMII) umgeformt und als GMII-Datensignale (SIG2) über die GMII-Schnittstelle (GMII) übertragen. Die übertragenen GMII-Datensignale (SIG2) werden für eine Ethernet-konforme Übertragung über eine MDI-Schnittstelle (MDI) umgewandelt (SIG3) und als MDI-Datensignale (SIG3) über eine mehradrige Kabelverbindung zu einer zweiten Basisstationseinheit (BE2) übertragen.

## FIG 1

**Beschreibung**

Die Erfindung betrifft ein Verfahren und eine Anordnung zur Übertragung von Datensignalen, insbesondere von CPRI-konformen Datensignalen, zwischen räumlich getrennt angeordneten Basisstationseinheiten.

Es sind verteilte Architekturen von Basisstationen bekannt, die räumlich getrennte Basisstationseinheiten aufweisen und beispielsweise zur Funkversorgung eines Gebäudes verwendet werden.

Dabei ist üblicherweise eine erste Basisstationseinheit über eine CPRI-Schnittstelle ("Common Public Radio Interface, CPRI") mit zumindest einer weiteren, zweiten Basisstationseinheit verbunden.

Nähere Informationen zu "CPRI" sind beispielsweise der "Interface Specification V2.0." unter "HTTP: \\www.cpri.info" entnehmbar.

Beispielsweise kann es sich bei der ersten Basisstationseinheit um eine als "Radio Equipment Control, REC" bezeichnete Steuereinheit handeln, die über die CPRI-Schnittstelle mit zumindest einer als " Radio Equipment,RE" bezeichneten zweiten Basisstationseinheit verbunden ist. Die zweite Basisstationseinheit ist zum Senden bzw. zum Empfangen von Funksignalen ausgestaltet.

Jeweilige Entfernungen zwischen der ersten Basisstationseinheit und zumindest einer weiteren zweiten Basisstationseinheit sind üblicherweise so groß, dass mit großem Aufwand an Montage und Kosten eine optische CPRI-Verbindung verlegt werden muss, um Datensignalen mit hohen Datenraten übertragen zu können. Zu diesem Zweck werden beispielsweise in Gebäuden optische Faserkabel verwendet.

Es ist Aufgabe der vorliegenden Erfindung, ein Verfahren und eine Anordnung für eine einfache und kostengünstige Übertragung von Datensignalen zwischen räumlich getrennt angeordneten Basisstationseinheiten anzugeben, um eine Übertragung mit hohen Datenraten zu ermöglichen.

Diese Aufgabe wird durch die Merkmale des Patentanspruchs 1 und des Patentanspruchs 12 gelöst. Vorteilhafte Weiterbildungen sind in den jeweiligen Unteransprüchen angegeben.

Erfindungsgemäß werden bereits vorhandene Verbindungskabel zur Übertragung von CPRI-konformen Datensignalen, die im Allgemeinen eine hohe Datenrate aufweisen, verwendet.

Die erfindungsgemäß verwendeten Verbindungskabel sind vorteilhafterweise als mehradrige, so genannte "Category-5"-Kabel ausgebildet.

Vorteilhafterweise wird der bekannte Gigabit Ethernet Standard 1000Base-T zur Übertragung von CPRI-konformen Signalen bzw. von CPRI-Signalen verwendet, wobei die Basisstationseinheiten beispielsweise über ein Standard "Twisted Pair"-Kabel miteinander verbunden sind.

Weitere Informationen zum Gigabit Ethernet Standard 1000Base-T (Clause 40) sind insbesondere der Druckschrift "IEEE Standard 802.3-2002", Part 3, "Carrier sense multiple access with collision detection (CSMA/CD) access method and physical layer specifications" entnehmbar

Als Standard "Twisted Pair"-Kabel kann beispielsweise ein als "CAT5" bekanntes Kabel verwendet werden.

Über das "Category-5"-Verbindungskabel wird dann ein CPRI-Datensignal der Bitraten-Option 2 mit 1228.8 Mbps unkodiert, d.h. ohne 8b10b-Kodierung, im Payload-Bereich der Gigabit Ethernet Rahmenstruktur übertragen.

Mit Hilfe der vorliegenden Erfindung können somit zusätzlich zu verlegende optische Faserkabel-Verbindungen eingespart werden.

Die Erfindung ist insbesondere für Entfernungen bis ca. 100 Meter äußerst kostengünstig einsetzbar - im Vergleich mit einem optischen, bislang verwendeten Faserkabel.

Nachfolgend wird die Erfindung anhand einer Zeichnung näher erläutert. Dabei zeigt:

FIG 1    anhand eines Blockschaltbilds ein Ausführungsbeispiel der vorliegenden Erfindung,

FIG 2    eine erste Rahmenstruktur, die bei der erfindungsgemäßen Übertragung verwendet wird, und

FIG 3    eine alternative zweite Rahmenstruktur die bei der erfindungsgemäßen Übertragung verwendet wird.

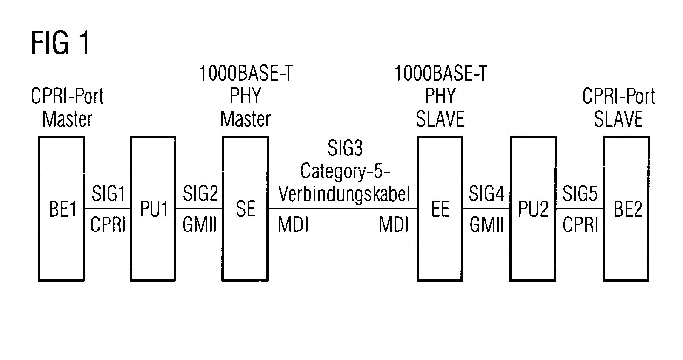

FIG 1 zeigt anhand eines Blockschaltbilds ein Ausführungsbeispiel der vorliegenden Erfindung.

Dabei wird ein "Category-5"-Kabel verwendet, das beispielsweise in einem Bürogebäude für eine Ethernet Infrastruktur installiert wurde.

Von einer als "CPRI-Port Master" bezeichneten ersten Basisstationseinheit BE1, die eine CPRI-Master-Funktionalität aufweist, gelangen CPRI-Datensignale SIG1 über eine CPRI-Schnittstelle CPRI an einen ersten Protokollumsetzer PU1.

Dabei weisen die CPRI-Datensignale SIG1 beispielsweise als CPRI-Signale der "Line Bit Rate Option 2" eine Datenrate von 1.2288 Gbit/s auf.

Der erste Protokollumsetzer PU1 formt ihm zugeführte Datensignale SIG1 in Datensignale SIG2 derart um, dass diese über eine herkömmliche GMII-Schnittstelle gemäß dem Gigabit Ethernet Standard 1000Base-T (Clause 35) übertragbar sind. Nachfolgend werden deshalb diese umgeformten Datensignale als GMII-Datensignale SIG2 bezeichnet.

Eine als "1000 BASE-T PHY MASTER" bezeichnete Sendeeinheit SE empfängt die GMII-Datensignale SIG2 und bildet daraus Datensignale SIG3, die für eine Ethernet-konforme Übertragung gemäß dem Standard 1000BASE T für eine Übertragung über ein "Category-5"-Verbindungskabel geeignet sind.

Die Datensignale SIG3 der Sendeeinheit SE werden über herkömmliche MDI-Schnittstellen ("Media Dependent Interface, MDI" gemäß Gigabit Ethernet Standard 1000Base-T (Clause 40)) übertragen, weshalb diese nachfolgend als MDI-Datensignale SIG3 bezeichnet werden.

Nach erfolgter Übertragung über das "Category-5"-Verbindungskabel werden die MDI-Datensignale SIG3 von einer als "1000 BASE-T PHY SLAVE" bezeichneten Empfangseinheit EE empfangen.

Die Empfangseinheit EE wandelt die MDI-Datensignale SIG3 in Datensignale SIG4 derart um, dass diese über eine herkömmliche GMII-Schnittstelle gemäß dem Standard IEEE 802.3 übertragbar sind. Nachfolgend werden deshalb diese umgewandelten Datensignale als GMII-Datensignale SIG4 bezeichnet.

Die GMII-Datensignale SIG4 gelangen an einen zweiten Protokollumsetzer PU2, der die ihm zugeführten GMII-Datensignale SIG4 in Datensignale SIG5 derart umwandelt, dass diese über eine herkömmliche CPRI-Schnittstelle CPRI übertragbar sind. Nachfolgend werden deshalb diese umgewandelten Datensignale als CPRI-Datensignale SIG5 bezeichnet.

Die CPRI-Datensignale SIG5 gelangen letztlich zu einer als "CPRI Port Slave" bezeichneten zweiten Basisstationseinheit BE2, die eine CPRI-Slave Funktionalität wahrnimmt bzw. aufweist.

Vorteilhafterweise wird bei der vorliegenden Erfindung zur Datensignalübertragung über das "Category-5"-Verbindungskabel ein so genannter "Burstmodus" verwendet. Dabei wird eine streng periodische, rahmenorientierte Datenübertragung mit einer Ethernet-Rahmenstruktur und mit einer festgelegten Rahmenlänge durchgeführt.

Bei der beispielhaft beschriebenen Ausgestaltung wurde lediglich eine Datensignalübertragung von der ersten Basisstationseinheit BE1 zur zweiten Basisstationseinheit BE2 beschrieben. Entsprechend können jedoch auch umgesetzte Datensignale von der zweiten Basisstationseinheit BE2 zur ersten Basisstationseinheit BE1 erfolgen.

Ebenfalls sind Datensignalübertragungen zwischen einer ersten Basisstationseinheit und mehreren weiteren (zweiten) Basisstationseinheiten möglich - hier nicht dargestellt.

Nachfolgend werden zwei Varianten zur Funktionsweise des ersten Protokollumsetzers PU1 beschrieben. Der zweite Protokollumsetzer PU2 ist dann entsprechend invertiert auszugestalten.

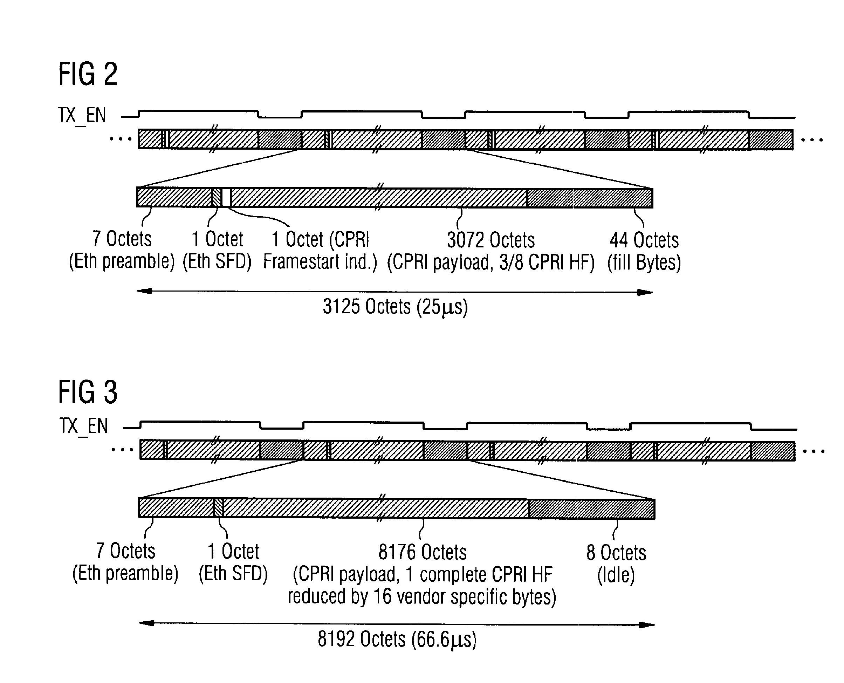

FIG 2 zeigt eine erste Rahmenstruktur, die bei der erfindungsgemäßen Übertragung verwendet wird.

Bei dieser Variante erfolgt eine Taktung der Sendeeinheit SE mit einer Taktfrequenz von 125 MHz.

Der erste Protokollumsetzer PU1 erzeugt aus jeweils N x 3072 (mit N positiv ganzzahlig) Bytes eines unkodierten, d.h. ohne 8b10b-Kodierung versehenen CPRI-Rahmens ein quasi-Ethernet-Packet mit einer Zeitdauer von N x 25μs.

Da auf der Ethernet-Schnittstelle in der Zeitdauer von N x 25μs insgesamt N x 3125 Bytes übertragen werden können (errechnet aus 125 MHz Taktfrequenz x N x 25μs) verbleiben je Ethernet-Rahmen jeweils N x 53 zusätzliche Bytes.

Die kleinstmöglichen Rahmengrößen ergeben sich für N=1 (Bevorzugte Realisierungsoption).

Ohne Beschränkung der Allgemeinheit werden daher alle weiteren Betrachtungen für N=1 beispielhaft durchgeführt.

Die 53 zusätzlichen Bytes werden vorteilhafterweise für eine Ethernet Preamble mit einer Länge von 7 Byte, für einen "Start Frame Delimiter, SFD" mit einer Länge von 1 Byte, für einen "CPRI-Framestart Indicator" mit einer Länge von 1 Byte und für so genannte "Idle-Bytes" oder "fill Bytes" mit einer Länge von 44 Bytes verwendet.

Jeweils drei komplette CPRI-Hyperrahmen bzw. CPRI-Hyperframes werden in acht aufeinander folgenden Ethernet-Rahmen über die GMII-Schnittstelle vom ersten Protokollumsetzer PU1 zur Sendeeinheit SE1 übertragen.

Ein zusätzlicher Delay wird durch einen Ethernet-Rahmen-Overhead der Länge 53 Bytes * 8ns = 424 ns gebildet, wobei die 8 ns der 125 MHz Byte-Rate entsprechen.

FIG 3 zeigt eine alternative zweite Rahmenstruktur die bei der erfindungsgemäßen Übertragung verwendet wird.

Bei dieser Variante erfolgt eine Taktung der Sendeeinheit SE mit einer Taktfrequenz von 122.88 MHz.

Aus den CPRI-Daten eines kompletten CPRI-Hyperframes wird durch den ersten Protokollumsetzer PU1 jeweils ein quasi-Ethernet-Rahmen generiert und über die GMII-Schnittstelle an die Sendeeinheit SE übertragen.

Ein CPRI-Hyperframe besteht aus 8192 Bytes. Dieser muss, da bei diesem Beispiel die Taktraten der Sendeeinheit SE und der CPRI-Schnittstelle CPRI identisch sind, in einen quasi-Ethernet-Rahmen mit derselben Länge "eingepackt" bzw. umgesetzt werden.

Um die für den Ethernet-Rahmen notwendigen zusätzlichen Header-Bytes und Idle-Bytes zur Rahmentrennung unterbringen zu können, wird eine gewisse Anzahl nicht verwendeter Bytes aus dem ursprünglichen CPRI-Hyperframe entfernt.

Hierfür können die so genannten "vendor specific" oder "reserved" Bytes des ursprünglichen CPRI-Protokolls verwendet werden.

Die Taktumsetzung zwischen den Schnittstellen CPRI und GMII ist Teil des Protokollumsetzers PU1. Entsprechend ist die Taktrückgewinnung zwischen den Schnittstellen GMII und CPRI Teil des Protokollumsetzers PU2.

Bei einer Taktung der Sendeeinheit SE mit einer Taktfrequenz von 125 MHz wie in der Figur FIG 2 werden die Bytes in der CPRI-Schnittstelle (Line Bit Rate Option 2) innerhalb eines 10ms Rahmens wie folgt nummeriert:

$$j = Y + 2 * W + 32 * X + 8192 * Z$$

mit:

j als Byteindex,
Y als Byte-Nr. innerhalb eines Wortes im Bereich von Y=(0;1),
W als Wort-Nr. innerhalb eines CPRI Basic Frames im Bereich von W= (0 ; ...; 15),
X als Basic Frame Nr. innerhalb eines CPRI Hyperframes im Bereich von X=(0;...;255), und mit
Z als CPRI Hyperframe Nr. im Bereich von Z=(0;...;149).

Somit ergibt sich für j ein Bereich von j= 0; ...; 1228799.

Immer wenn "j" ohne Rest durch den Wert "3072" teilbar ist, wird ein Referenz-Impuls generiert. Die Frequenz der Referenz-Impulse beträgt dann 40kHz. Durch eine Vervielfachung mit einem Wert von "3125" wird darauf ein 125 MHz-Oszillator mittels einer "Phase-Locked-Loop, PLL" synchronisiert, die einen Master-Takt für die Sendeeinheit SE zur Verfügung stellt.

In diesem Fall wird der Takt der Empfangseinheit EE wie folgt generiert bzw. zurückgewonnen:

Nach 3125 Bytes, die von der Empfangseinheit EE empfangen wurden (beginnend mit "Frame-Start", der durch die sieben Preamble Octets, gefolgt von einem "Start Frame Delimiter, SFD" Octet und einem "CPRI-Rahmenstart Indikator" Octet gekennzeichnet wird) wird ein Referenz-Impuls generiert.

Die Frequenz der Referenz-Impulse beträgt daher 40 kHz. Durch eine Vervielfachung mit einem Wert "3072" wird darauf ein 122.88 MHz Oszillator mittels einer "Phase-Locked-Loop, PLL" synchronisiert, die den Takt für die Empfangseinheit EE zur Verfügung stellt.

Durch Frequenzteiler bzw. Zähler können daraus Untertakte wie beispielsweise 3.84 MHz als "Basic Frame" Takt und 15 kHz als "Hyperframe-Takt" gewonnen werden.

Eine Phasensynchronisation bzw. ein Rücksetzen von verwendeten Zählern kann wie nachfolgend beschrieben erfolgen:

Zum "CPRI-Rahmenstart Indikator Octet":

Bei einer Taktung der Sendeeinheit SE mit einer Taktfrequenz von 125 MHz verteilen sich jeweils drei "CPRI Hyperframes" auf acht "quasi-Ethernet" Rahmen bzw. Frames.

Folglich beginnt mit jedem achten "quasi-Ethernet Rahmen" ein neuer CPRI-Hyperframe. Um einen Start des CPRI-Hyperframe eindeutig zu kennzeichnen, wird in jedem quasi-Ethernet Rahmen ein so genanntes "CPRI Rahmenstart Indikator" Octet (Byte) zur eindeutigen Kennzeichnung des ersten der acht "quasi-Ethernet-Rahmen" als tatsächlichen CPRI-Hyperframe Start eingefügt.

Eine Möglichkeit, dieses "CPRI Rahmenstart Indikator" Octet zu füllen, wäre mit einer Periodizität von acht "quasi-Ethernet Rahmen" die Werte "0, 1, 2, 3, 4, 5, 6, 7" in diesem "CPRI Rahmenstart Indikator" Octet zu codieren.

Der Wert "0" würde dann den ersten der acht "quasi-Ethernet-Rahmen", also den tatsächlichen Beginn des CPRI-Hyperframe markieren.

Die Phasensynchronisation der oben erwähnten Frequenzteiler bzw. Zähler erfolgt durch Rücksetzen auf den Wert "0" exakt zu Beginn des ersten CPRI-Payload Octets (siehe FIG 2) des ersten der acht "quasi-Ethernet-Rahmen".

Mit Hilfe der phasensynchronisierten Zählers wird jeweils zu Beginn eines Hyperframe anstelle des empfangenen "CPRI payload Octets" ein Specialcode K28.5 zur Empfangseinheit EE gesendet, um diesem eine Sychronisation nach CPRI-Standard zu erlauben.

Bei einer Taktung der Sendeeinheit SE mit einer Taktfrequenz von 122.88 MHz, wie in FIG 3 angenommen, entspricht der Takt der Sendeeinheit SE unmittelbar dem CPRI-Mastertakt von. 122.88 MHz. Der Takt der Empfangseinheit EE entspricht unmittelbar der Taktrate des empfangenen Datenstromes der Sendeeinheit SE, es erfolgt eine Taktgenerierung durch Taktrückgewinnung. Jeweils anstelle des ersten "CPRI Payload Octets" wird ein Specialcode K28.5 zur Empfangseinheit EE gesendet, um dieser eine Sychronisation nach CPRI-Standard zu erlauben.

Während einer so genannten "CPRI start-up sequence" (gemäß der CPRI-"Interface Specification V2.0."), die als "L1 state-B" bezeichnet wird, führt die Sendeeinheit SE einen autonomen "start-up" durch. Die Sendeeinheit SE wird dann entsprechend einer MASTER-SLAVE Vorgabe gemäß CPRI-Spezifikation konfiguriert.

Beispielsweise könnte die "Radio Equipment Control, REC" als erste Basisstationseinheit einen "Master" bilden, während das "Radio Equipment, RE" als zweite Basisstationseinheit einen SLAVE bildet.

**Patentansprüche**

1.  Verfahren zur Übertragung von Datensignalen zwischen räumlich getrennten Basisstationseinheiten (BE1, BE2),

    - bei dem Datensignale (SIG1) einer ersten Basisstationseinheit (BE1) über eine CPRI-Schnittstelle (CPRI) als, CPRI-Datensignale übertragen werden,
    - bei dem die CPRI-Datensignale (SIG1) für eine Übertragung über eine GMII-Schnittstelle (GMII) umgeformt und als GMII-Datensignale (SIG2) über die GMII-Schnittstelle (GMII) übertragen werden,
    - bei dem die übertragenen GMII-Datensignale (SIG2) für eine Ethernet-konforme Übertragung über eine MDI-Schnittstelle (MDI) umgewandelt (SIG3) und als MDI-Datensignale (SIG3) über eine mehradrige Kabelverbindung zu einer zweiten Basisstationseinheit (BE2) übertragen werden.

2.  Verfahren nach Anspruch 1, bei dem die über die Kabelverbindung übertragenen MDI-Datensignale (SIG3) für eine Übertragung über eine GMII-Schnittstelle (GMII) umgeformt und als GMII-Datensignale (SIG4) über die GMII-Schnittstelle (GMII) übertragen werden.

3.  Verfahren nach Anspruch 2, bei dem die GMII-Datensignale für eine Übertragung über eine CPRI-Schnittstelle (CPRI) umgeformt und als CPRI-Datensignale (SIG5) über die CPRI-Schnittstelle (CPRI) an die zweite Basisstationseinheit (BE2) übertragen werden.

4.  Verfahren nach einem der vorhergehenden Ansprüche, bei dem als mehradriges verbindungskabel ein "Category-5"-Verbindungskabel oder ein "Category-5E"-Verbindungskabel verwendet wird.

5.  Verfahren nach Anspruch 4, bei dem als Verbindungskabel ein "Twisted Pair"-Kabel verwendet wird.

6.  Verfahren nach einem der vorhergehenden Ansprüche, bei dem die Ethernet-konformen Datensignale (SIG3) unter Verwendung des Gigabit-Ethernet-Standards 1000Base-T übertragen werden.

7.  Verfahren nach Anspruch 6, bei dem die Datensignale (SIG1) der ersten Basisstationseinheit (BE1) als CPRI-Datensignale als Line-Bit-Rate-Option-2 mit einer Datenrate von 1.2288 Gbit/s unkodiert im Payload-Bereich der Gigabit-Ethernet-Rahmenstruktur übertragen werden.

8.  Verfahren nach einem der vorhergehenden Ansprüche,

    - bei dem die erste Basisstationseinheit (BE1) als Master mit einer CPRI-Master-Funktionalität verwendet wird, und
    - bei dem die zweite Basisstationseinheit (BE2) als Slave mit einer CPRI-Slave-Funktionalität verwendet wird.

9.  Verfahren nach einem der vorhergehenden Ansprüche,

    - bei dem die vor der Übertragung über das Verbindungskabel erfolgende Umformung der GMII-Datensignale (SIG2) in die MDI-Datensignale (SIG3) unter Verwendung des Standards 1000BASE-T durchgeführt wird, und/oder
    - bei dem die nach der Übertragung über das Verbindungskabel erfolgende Umformung der MDI-Datensignale (SIG3) in GMII-Datensignale (SIG4) unter Verwendung des Standards 1000BASE-T durchgeführt wird.

10. Verfahren nach einem der vorhergehenden Ansprüche,

    - bei dem die vor der Übertragung über das Verbindungskabel erfolgende Umformung der CPRI-Datensignale (SIG1) in die GMII-Datensignale (SIG2) unter Verwendung des Standards IEEE 802.3 durchgeführt wird, und/oder
    - bei dem die nach der Übertragung über das Verbindungskabel erfolgende Umformung der GMII-Datensignale (SIG4) in die CPRI-Datensignale (SIG5) unter Verwendung des Standards IEEE 802.3 durchgeführt wird.

11. Verfahren nach einem der vorhergehenden Ansprüche, bei dem zur Datensignalübertragung über das Verbindungskabel ein Burstmodus mit periodischer, rahmenorientierter Datenübertragung mit einer Ethernet-Rahmenstruktur und mit einer festgelegten Rahmenlänge verwendet wird.

12. Anordnung zur Übertragung von Datensignalen zwischen räumlich getrennten Basisstationseinheiten (BE1, BE2),

- bei der eine erste Basisstationseinheit (BE1) über eine CPRI-Schnittstelle (CPRI) mit einem ersten Protokollumsetzer (PU1) verbunden ist, so dass CPRI-Datensignale (SIG1) der ersten Basisstationseinheit (BE1) an den ersten Protokollumsetzer (PU1) gelangen,
- bei der der erste Protokollumsetzer (PU1) Mittel aufweist, mit denen die zugeführten CPRI-Datensignale (SIG1) für eine Übertragung über eine GMII-Schnittstelle (GMII) in GMII-Datensignale (SIG2) umgewandelt werden,
- bei der der erste Protokollumsetzer (PU1) über eine GMII-Schnittstelle (GMII) mit einer Sendeeinheit (SE) verbunden ist, so dass die GMII-Datensignale an die Sendeeinheit (SE) gelangen,
- bei der die Sendeeinheit (SE) Mittel aufweist, mit denen die zugeführten GMII-Datensignale (SIG2) für eine Übertragung über eine MDI-Schnittstelle (MDI) und über eine mehradrige Kabelverbindung in Ethernet-konforme MDI-Datensignale umgewandelt werden,
- bei der die Sendeeinheit (SE) über die MDI-Schnittstelle mit der mehradrigen Kabelverbindung verbunden ist, so dass die Ethernet-konformen MDI-Datensignale (SIG3) über die Kabelverbindung zu einer zweiten Basisstationseinheit (BE2) gelangen.

13. Anordnung nach Anspruch 12,

- bei der die Kabelverbindung über eine MDI-Schnittstelle (MDI) mit einer Empfangseinheit (EE) verbunden ist,
- bei der die Empfangseinheit (EE) Mittel aufweist, mit denen die über die Kabelverbindung übertragenen MDI-Datensignale (SIG3) für eine Übertragung über eine GMII-Schnittstelle (GMII) in GMII-Datensignale (SIG4) umgewandelt werden.

14. Anordnung nach Anspruch 13,

- bei der die Empfangseinheit (EE) über eine GMII-Schnittstelle (GMII) mit einem zweiten Protokollumsetzer (PU2) verbunden ist, so dass die GMII-Datensignale (SIG4) an den zweiten Protokollumsetzer (PU2) gelangen,
- bei der der zweite Protokollumsetzer (PU2) Mittel aufweist, mit denen die übertragenen GMII-Datensignale (SIG4) für eine Übertragung über eine CPRI-Schnittstelle (CPRI) in CPRI-Datensignale (SIG5) umgewandelt werden.

15. Anordnung nach Anspruch 14, bei der der zweite Protokollumsetzer (PU2) über eine CPRI-Schnittstelle (CPRI) mit der zweiten Basisstationseinheit (BE2) verbunden ist, so dass die übertragenen CPRI-Datensignale (SIG5) an die zweite Basisstationseinheit (BE2) gelangen.

16. Anordnung nach Anspruch 12, bei der das mehradrige Verbindungskabel als "Category-5"-Verbindungskabel ausgestaltet ist.

17. Anordnung nach Anspruch 16, bei dem das Verbindungskabel als "Twisted Pair"-Kabel ausgestaltet ist.

18. Anordnung nach Anspruch 12 oder 13, bei der die Mittel zur Umwandlung der Sendeeinheit (SE) und/oder der Empfangseinheit (EE) zur Durchführung einer Signalumwandlung gemäß dem Gigabit-Ethernet-Standard 1000Base-T ausgestaltet sind.

19. Anordnung nach einem der Ansprüche 12 bis 18,

- bei der die erste Basisstationseinheit (BE1) als Master mit einer CPRI-Master-Funktionalität ausgestaltet ist, und
- bei der die zweite Basisstationseinheit (BE2) als Slave mit einer CPRI-Slave-Funktionalität ausgestaltet ist.

20. Anordnung nach einem der Ansprüche 12 bis 19, bei der die Mittel zur Umwandlung des ersten Protokollumsetzers (PU1) und/oder des zweiten Protokollumsetzers (PU2) zur Durchführung einer Signalumwandlung gemäß dem Standard 1000BASE-T ausgestaltet sind.

# FIG 1

CPRI-Port
Master

1000BASE-T
PHY
Master

1000BASE-T
PHY
SLAVE

CPRI-Port
SLAVE

SIG3
Category-5-
Verbindungskabel

| BE1 | SIG1 | PU1 | SIG2 | SE | | EE | SIG4 | PU2 | SIG5 | BE2 |
| | CPRI | | GMII | | MDI      MDI | | GMII | | CPRI | |

# FIG 2

TX_EN

7 Octets
(Eth preamble)

1 Octet
(Eth SFD)

1 Octet (CPRI
Framestart ind.)

3072 Octets
(CPRI payload, 3/8 CPRI HF)

44 Octets
(fill Bytes)

3125 Octets (25μs)

# FIG 3

TX_EN

7 Octets
(Eth preamble)

1 Octet
(Eth SFD)

8176 Octets
(CPRI payload, 1 complete CPRI HF
reduced by 16 vendor specific bytes)

8 Octets
(Idle)

8192 Octets (66.6μs)

EP 1 860 895 A1

Europäisches
Patentamt

**EUROPÄISCHER RECHERCHENBERICHT**

Nummer der Anmeldung

EP 06 01 0766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "CPRI Specification V2.1 (2006-03-31)" INTERNET CITATION, [Online] 31. März 2006 (2006-03-31), Seiten 1-76, XP002404197 Gefunden im Internet: URL:http://www.cpri.online/> [gefunden am 2006-10-23] * Absatz [0001]; Abbildung 1 * * Absatz [04.1] - Absatz [4.3.3] * * Absatz [06.2] * ----- | 1-20 | INV. H04Q7/30 |
| A | WO 2005/048624 A (ERICSSON TELEFON AB L M [SE]) 26. Mai 2005 (2005-05-26) * Absatz [0008] - Absatz [0010] * * Absatz [0015] - Absatz [0017] * * Absatz [0065] * ----- | 1-20 | |
| A | "802.3 Part 3: Carrier sense multiple access with collision detection (CSMA/CD) access method and physical layer specification" IEEE STD 802.3-2002, 8. März 2002 (2002-03-08), Seiten 1-82, XP002404185 New York * Absatz [1.1.2.2] * * Abbildung 1 * * Absatz [1.4.249] * ----- | 1-20 | **RECHERCHIERTE SACHGEBIETE (IPC)** H04Q |

Der vorliegende Recherchenbericht wurde für alle Patentansprüche erstellt

| Recherchenort | Abschlußdatum der Recherche | Prüfer |
|---|---|---|
| Berlin | 24. Oktober 2006 | ROTHLUEBBERS, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 06 01 0766

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2006

| Im Recherchenbericht angeführtes Patentdokument | Datum der Veröffentlichung | Mitglied(er) der Patentfamilie | Datum der Veröffentlichung |
|---|---|---|---|
| WO 2005048624 A | 26-05-2005 | EP 1685728 A1 | 02-08-2006 |

Für nähere Einzelheiten zu diesem Anhang : siehe Amtsblatt des Europäischen Patentamts, Nr.12/82